# FASCICULE DE BREVET EUROPEEN

(11) **EP 2 006 585 B1**
(45) Date de publication et mention de la délivrance du brevet: **21.10.2009**
(21) Numéro de dépôt: 08156438.7
(22) Date de dépôt: 19.05.2008
(51) Int. Cl.: F16K 5/06

(54) **Vanne de régulation**
Durchflusseinstellventil
Control valve

(30) Priorité: 19.06.2007 FR 0755845
(43) Date de publication de la demande: 24.12.2008
(73) Titulaire: SNECMA, 75015 Paris (FR)
(72) Inventeur: Faye, Olivier, 27120 Menilles (FR); Barre, William, 27400 Louviers (FR)
(74) Mandataire: Desormiere, Pierre-Louis

(56) Documents cités:
- EP-A- 1 367 305
- US-B2- 7 150 445

## Description

### Domaine de l'invention

La présente invention concerne le domaine des vannes de régulation qui permettent le réglage de la perte de charge dans un circuit de circulation de fluide tel qu'un circuit d'alimentation de fluide cryotechnique utilisé dans les moteurs-fusées. Ce type de vanne est muni d'un élément d'obturation qui, en fonction de sa position, régule la perte de charge et, par conséquent, le débit de fluide dans un conduit.

### Art antérieur

Les vannes de régulation sont aujourd'hui présentes dans la plupart des systèmes de régulation de fluide et représentent un élément important de ces systèmes. En effet, des systèmes de régulation complexes et intelligents sont en permanence développés pour permettre un contrôle sur le réglage du fluide toujours plus performant. Toutefois, quel que soit le niveau de traitement du processus de régulation, les systèmes de régulation doivent toujours au final agir sur des éléments physiques de réglage, à savoir des vannes de régulation.

A cet effet, des vannes de régulation ont été développées pour permettre à un moindre coût une action précise sur le fluide et, de préférence, une action proportionnelle à la commande qui leur est transmise, et ce sur une plage de débit de fluide allant d'un débit quasi nul à un débit aussi important que possible dans un volume donné.

Dans beaucoup d'industries, les exigences de coût et de fiabilité prévalent sur celles d'encombrement et de masse pour les vannes de régulation. A cet effet, on continue à utiliser des technologies traditionnelles de vannes éprouvées depuis longtemps tels que des vannes de type quart de tour à boisseau, papillon ou lumière. Leur simplicité de conception et leur vaste domaine d'utilisation permettent de réaliser des gammes de vannes standardisées à faible coût qui présentent un bon niveau de fiabilité et des performances de régulation suffisantes vis-à-vis des marges de conception tolérées. La précision de fonctionnement nécessaire à la mise en oeuvre de la régulation est alors reportée sur un actionneur dont est équipé la vanne et qui, lorsqu'il est associé à une puissance disponible importante (électrique ou hydraulique) ainsi qu'à une électronique de pilotage performante, assure le fonctionnement global du système de régulation. En particulier, l'utilisation d'électronique numérique de pilotage permet à un faible coût de réaliser des fonctions d'asservissement en boucle fermé dont la précision est théoriquement quasiment sans limite.

Dans ce type de système, la fonction d'étanchéité ou d'arrêt de vanne en fin de course ne présente pas de difficulté technique particulière et peut être implantée selon les mêmes principes que pour les vannes tout ou rien du même type, et ce sans perturber ni limiter la fonction de réglage/régulation de la vanne.

Cependant, dans le contexte aéronautique, et à fortiori dans le domaine spatial des lanceurs, la nature et le niveau des exigences vis-à-vis des vannes de régulation sont tout à fait différents. Outre les fluides très particuliers que doivent gérer les vannes dans ce domaine (fluides cryogéniques, oxydants, fragilisants, etc.), la contrainte de masse est prédominante. Par ailleurs, dans les lanceurs spatiaux, l'énergie électrique est limitée et le coût d'une l'électronique de contrôle sophistiquée très élevé.

Un dispositif de vanne permettant d'apporter une réponse très satisfaisante à la problématique particulière du domaine spatial a été proposé dans le document US 7 150 445. Toutefois, si le dispositif de vanne décrit dans ce document constitue un organe de régulation performant notamment en tant que vanne de type "by-pass" dans des moteurs-fusées, il ne présente pas une conception adaptée pour réaliser en outre une fonction d'arrêt fiable. Or, pour la plupart des cycles de fonctionnement d'un moteur-fusée, les moyens de réglage/régulation nécessitent d'être couplés à des moyens d'arrêt permettant d'isoler totalement des circuits du fluide, ce qui permet l'arrêt et la mise en sécurité du moteur. Une solution consiste alors à intégrer deux vannes en série, chacune dédiée à une fonction spécifique, à savoir une première vanne d'arrêt en série avec une seconde vanne de régulation.

Cette solution présente néanmoins l'inconvénient de multiplier les organes à commander, les interfaces de contrôle et les volumes occupés dans le moteur, ce qui a, par conséquent, un impact négatif sur les performances et le coût du moteur-fusée. Il existe donc un besoin, pour permettre de réduire encore le coût, la masse et l'encombrement dans les systèmes de contrôle de fluide des moteurs-fusées.

### Objet et description succincte de l'invention

La présente invention vise à remédier aux inconvénients précités et à réaliser un dispositif de vanne capable de réaliser à lui seul à la fois une fonction de régulation/réglage avec une grande précision et une fonction d'arrêt fiable, et ce avec une conception suffisamment simple pour permettre une intégration aisée du dispositif de vanne avec les systèmes de contrôle existants tout en minimisant le coût de fabrication.

Ces buts sont atteints grâce à un dispositif de vanne comprenant un corps de vanne délimitant un conduit de circulation de fluide dans lequel est disposé un élément de laminage entraîné en rotation autour de son axe par un moyen actionneur via un arbre d'entraînement, l'élément de laminage comportant une cavité interne délimitée par une paroi circulaire ouverte dans sa partie inférieure. La paroi circulaire présente en outre sur une partie de son pourtour une ouverture de forme évolutive de manière à définir un passage de fluide variable dans le conduit entre une position de pleine ouverture dans laquelle l'ouverture coopère totalement avec le conduit et une position de pleine fermeture dans laquelle ladite paroi circulaire ferme le conduit. Conformément à l'invention, le dispositif de vanne comprend en outre un joint annulaire d'étanchéité disposé dans le conduit de circulation, le joint étant en contact avec la paroi de la cavité interne de l'élément de laminage. La cavité interne de l'élément de laminage est de forme sphérique de manière à ce que, en position de pleine fermeture de la vanne, toute la circonférence du joint d'étanchéité est en contact avec la paroi de la cavité interne de l'élément de laminage.

Ainsi, le dispositif de vanne selon l'invention permet de réaliser avec un seul élément de laminage non seulement un réglage/régulation de grande précision mais aussi une fonction d'arrêt fiable.

En effet, le dispositif de l'invention dispose d'un élément de laminage permettant une longue course de réglage/régulation qui permet de diminuer la précision de positionnement requise habituellement sur l'actionneur et l'électronique de contrôle sans pour autant diminuer la précision de régulation de la vanne. Les coûts induits sur l'actionneur et l'électronique associée sont alors significativement diminués.

Par ailleurs, en réalisant la fonction d'arrêt au moyen d'un joint annulaire en appui sur la paroi de la cavité interne de l'élément de laminage qui forme une surface de portée du joint sphérique, on assure une excellente étanchéité entre la partie amont et aval du conduit de la vanne et, par conséquent, une fonction d'arrêt d'une grande fiabilité et d'une bonne disponibilité. La commande de la fonction d'arrêt peut être aisément et simplement intégrée dans l'électronique de régulation car cette fonction est réalisée par l'élément de laminage déjà contrôlé pour le réglage de la vanne.

En outre, lorsque le dispositif de vanne est destiné à contrôler la circulation de fluides cryogéniques comme dans les lanceurs spatiaux, il est impossible d'utiliser des matériaux tels que des polymères de type caoutchouc pour réaliser des étanchéités sur des surfaces non planes en raison du raidissement du polymère à basse température. La conception du dispositif de vanne selon l'invention permet de répondre à ce problème en ramenant l'étanchéité sur un contact cylindre/sphère pour assurer une surface d'appui de joint plane. Dans la présente invention, le joint annulaire d'étanchéité disposé dans le conduit de circulation est réalisé de préférence avec l'un des matériaux suivants: polytétrafluoroéthylène (PTFE) couramment appelé Téflon®, polyimide Vespel®, et Polytrifluorochloréthylène (PTFCE).

Le dispositif de vanne de l'invention cumule les fonctions de réglage et d'arrêt tout en présentant une architecture simple et compacte permettant de maîtriser les coûts de développement et de fabrication.

Selon un aspect de l'invention, l'élément de laminage comporte un anneau de matière en dessous de l'ouverture de manière à ce que le joint d'étanchéité puisse, même en position de pleine ouverture de la vanne, être au moins en appui sur deux zones diamétralement opposées. Cela permet d'éviter les risques d'endommagement du joint lors des manoeuvres de l'élément de laminage.

Le dispositif de vanne selon l'invention comprend en outre un tube porte joint disposé dans le conduit de circulation de fluide, le joint étant maintenu entre l'extrémité du tube porte joint et la paroi de la cavité interne de l'élément de laminage.

Le tube porte joint peut être maintenu dans une position fixe à l'intérieur de conduit de circulation de fluide ou être monté coulissant dans le conduit. Dans ce dernier cas, le dispositif comprend en outre des moyens pour appliquer un effort de maintien sur le tube porte joint en direction de la paroi de la cavité interne de l'élément de laminage, ce qui permet d'avoir un effort de contact entre le joint et l'élément de laminage quasi constant même en cas d'usure du joint.

L'ouverture de l'élément de laminage peut présenter un profil qui s'agrandit progressivement autour de l'élément de laminage de manière à obtenir, en fonction de l'angle de rotation entre les positions de pleine ouverture et de pleine fermeture, une évolution de la section hydraulique linéaire.

Toutefois, l'ouverture peut présenter un profil différent en fonction de la loi de perte de charge désirée.

L'ouverture de l'élément de laminage peut s'étendre autour de la paroi circulaire de l'élément de laminage sur un angle allant jusqu'à 250° environ.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en coupe transversale d'un dispositif de vanne conformément à un premier mode de réalisation selon l'invention,
- les figures 1A et 1B sont des vues de détail du dispositif de vanne de la figure 1,
- les figures 2A à 2H montrent l'élément de laminage du dispositif de vanne de la figure 1 lorsqu'il est manoeuvré entre une position de pleine ouverture et une position de pleine fermeture,
- la figure 3 montre en développé sur un plan l'évolution de la section de passage de fluide lors de la rotation de l'élément de laminage,
- la figure 4 représente le dispositif de vanne de la figure 1 dans une position de pleine fermeture,
- la figure 5 est une vue schématique en coupe transversale d'une variante de réalisation d'un dispositif de vanne selon l'invention,
- la figure 5A est une vue de détail du dispositif de vanne de la figure 5.

### Description détaillée des modes de réalisation de l'invention

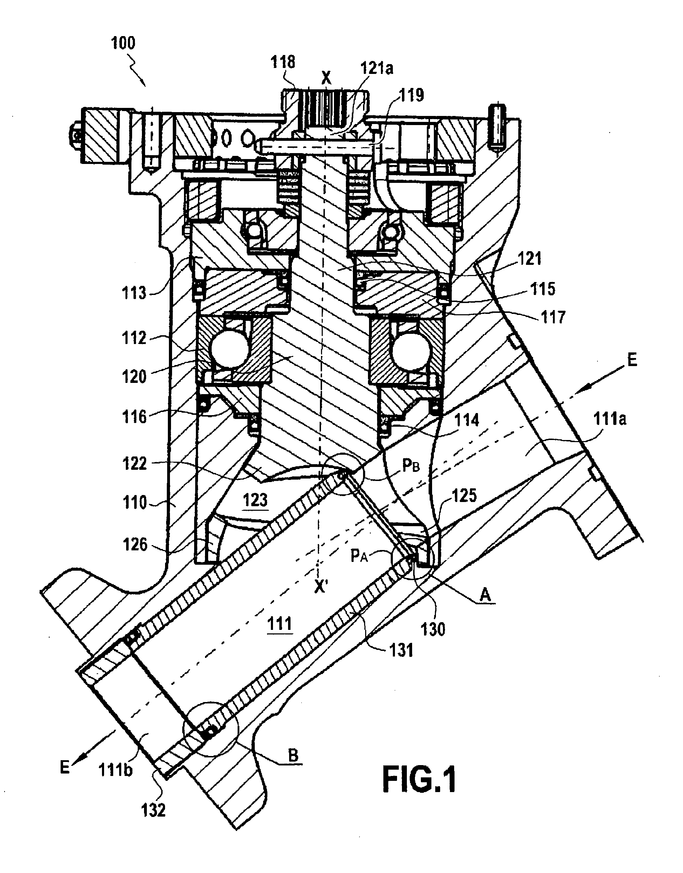

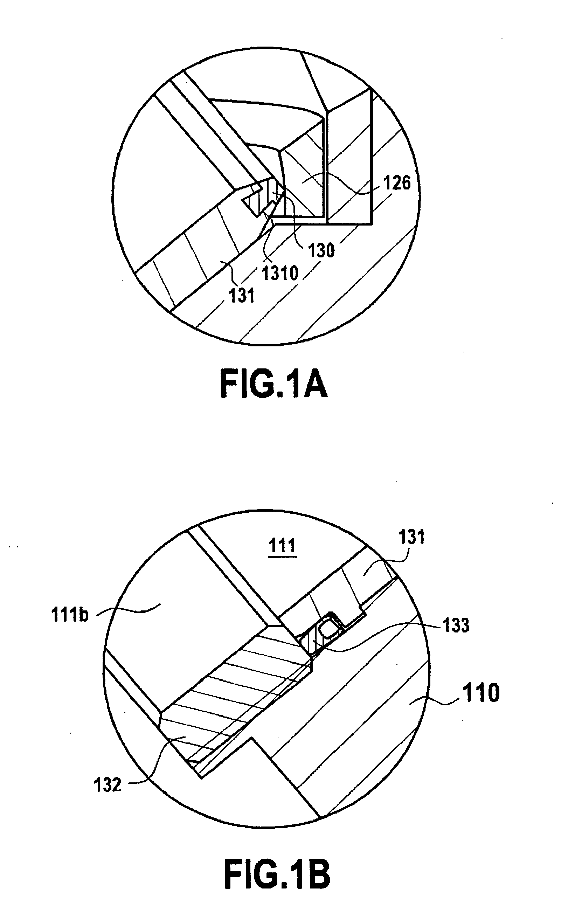

La figure 1 représente, selon un mode de réalisation de l'invention, un dispositif de vanne de régulation 100 qui comprend un corps de vanne 110 délimitant dans sa partie inférieure un conduit de circulation de fluide 111 comportant une partie amont 111a et une partie aval 111b selon un sens écoulement E. Les parties 111a et 111b du conduit 111 comprennent chacune une bride de raccordement pour permettre l'insertion du dispositif de vanne dans un circuit de circulation de fluide comme un circuit de fluide cryotechnique dans un moteur-fusée par exemple. Le dispositif de vanne 100 comprend également un élément de laminage 120 disposé à l'intérieur du corps de vanne 110.

L'élément de laminage 120, qui est destiné à être entraîné en rotation autour de son axe de révolution XX,' comprend une partie supérieure 121 présentant une forme étagée et qui est en appui sur des roulements 112 et 113 à contact oblique reprenant les efforts axiaux et latéraux. L'étanchéité entre le conduit de circulation de fluide 111 et le reste du dispositif de vanne est assurée notamment par des joints 114 et 115 disposés entre l'élément de laminage 120 et le corps de vanne 111 via respectivement des fourreaux porte joint 116 et 117. L'extrémité 121a de la partie supérieure de l'élément de laminage est connectée via une goupille 119 à une pièce d'accouplement 118 avec un arbre d'actionneur (non représenté) destiné à entraîner l'élément de laminage en rotation sur un axe XX'.

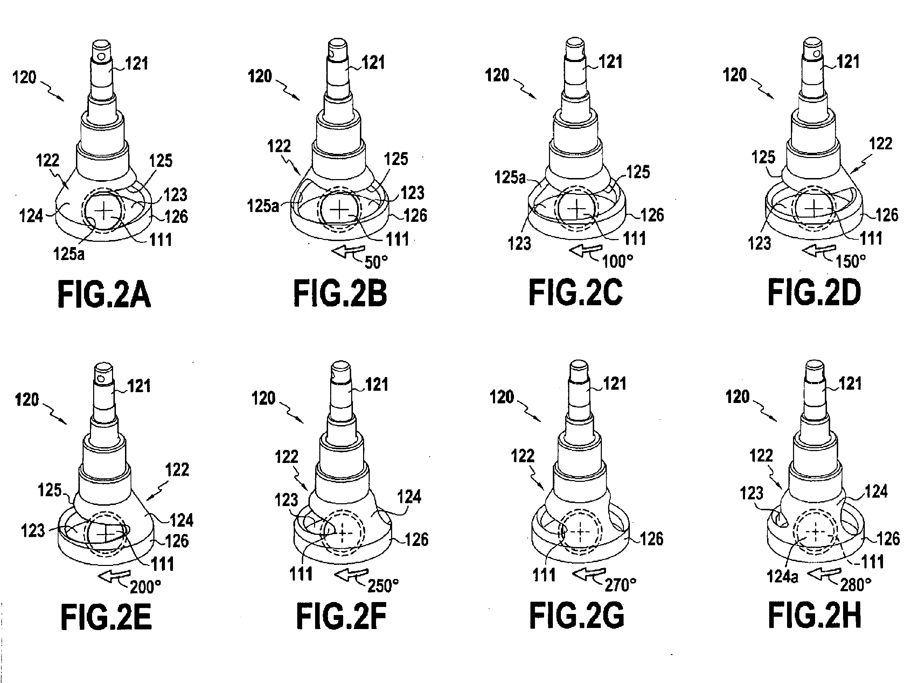

Comme représenté sur la figure 2A, l'élément de laminage comprend aussi une partie inférieure 122 qui s'étend à l'intérieur du conduit de circulation de fluide 111. Cette partie de l'élément de laminage est évidée de manière à former une cavité interne 123 délimitée par une paroi circulaire 124 ouverte dans sa partie inférieure. La paroi circulaire 124 comporte en outre une ouverture 125 de forme évolutive pour permettre la régulation de la circulation du fluide dans le conduit 111.

Plus précisément, comme illustré sur les figures 2A à 2H, l'actionnement de la vanne s'opère par la mise en rotation de l'élément de laminage 120 entre une position de pleine ouverture, dans laquelle l'ouverture 125 coopère totalement avec le conduit 111 libérant ainsi une section quasi rectiligne d'écoulement à très faible perte de charge (figure 2A) et une position de pleine fermeture, dans laquelle la paroi circulaire 124 obstrue totalement le conduit 111 (figure 2H). L'élément de laminage 120 permet, grâce à son ouverture 125 de forme évolutive, d'obstruer progressivement la veine hydraulique formée par le conduit 111, l'évolution de la section de passage de fluide étant fonction de l'angle de rotation appliqué à l'élément de laminage 120 tel qu'illustré sur les figures 2A à 2H.

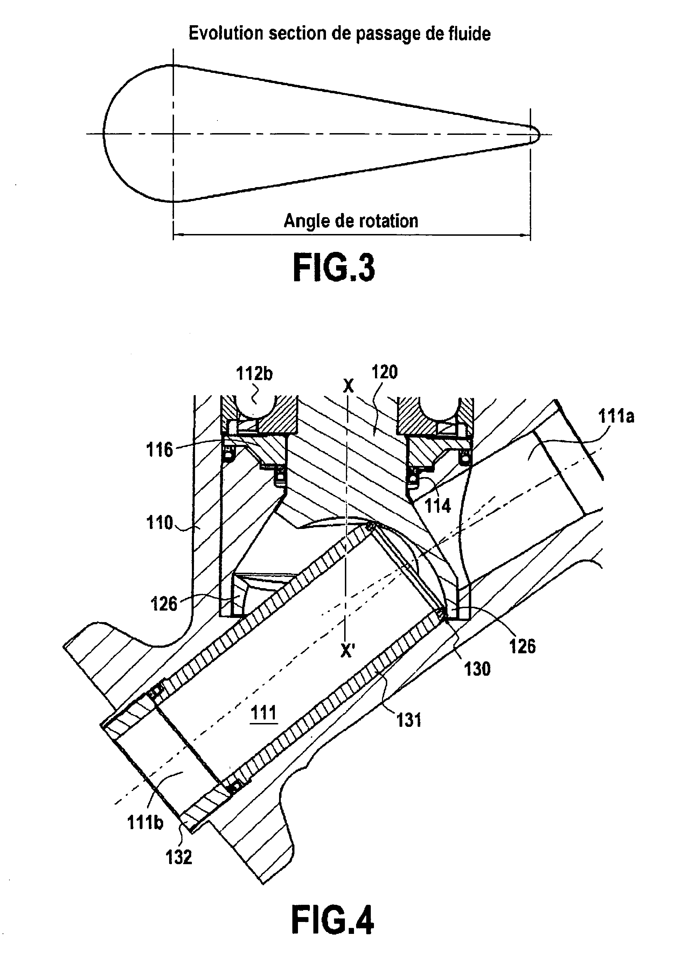

L'ouverture 125 s'étend autour de la paroi circulaire 124 de l'élément de laminage 120 sur un angle de 250° environ. L'ouverture 125 s'agrandit progressivement autour de l'élément de laminage, ce qui permet une régulation ou un réglage de section de passage de fluide sur un grand angle de rotation (ici 270°) et donc une excellente précision de réglage de la vanne. La figure 3 montre l'évolution de la section de passage de fluide lors de la rotation de l'élément de laminage entre les positions d'ouverture et de fermeture.

L'ouverture 125 présente au moins une première portion 125a qui forme une ouverture de dimension équivalente à la section du conduit 111 pour permettre l'effacement complet de la paroi 124 lorsque la vanne est en position de pleine ouverture. A l'inverse, la paroi 124 doit également présenter une portion pleine 124a d'une surface au moins équivalente à la section du conduit 111 pour permettre une fermeture totale du conduit 111 lorsque la vanne est en position de pleine fermeture.

Dans le mode de réalisation présenté ici, l'ouverture 125 présente un profil qui se rétrécit progressivement permettant une évolution linéaire de la section hydraulique suivant l'angle de rotation (perte de charge quasi linéaire). Toutefois, la forme du profil de l'ouverture peut être adaptée en fonction de la loi de perte de charge désirée dans la vanne (variation de la pente du profil, profil en créneaux, etc.)

Conformément à l'invention, le dispositif de vanne 100 comprend en outre un joint d'étanchéité annulaire 130 disposé entre les parties amont 111a et aval 111b du conduit 111. Dans le mode de réalisation présenté en figure 1, le joint d'étanchéité 130 est maintenu en appui sur la paroi de la cavité interne 123 de l'élément de laminage 120 par un tube porte joint 131 placé en aval de l'élément de laminage 120 dans le conduit 111. Le tube porte joint 131 comporte à son extrémité voisine de l'élément de laminage un logement annulaire 1310 dans lequel est maintenu le joint 130 (figure 1A). Le tube porte joint 131 étant maintenu en position par une bague de blocage 132 fixée dans le corps de vanne par vissage, soudure, collage ou autre, l'étanchéité entre le porte joint 131 et la bague 132 étant réalisée par un joint 133 (figure 1B).

Toujours conformément à l'invention, la cavité interne 123 est de forme sphérique, ce qui permet d'avoir, en position de pleine fermeture, une surface de contact entre le joint d'étanchéité annulaire 130 et la paroi de la cavité interne 123 qui s'étend sur toute la circonférence du joint. Ainsi, en position de pleine fermeture comme illustrée sur la figure 4, le joint 130 assure l'étanchéité amont/aval dans le conduit conférant ainsi au dispositif de vanne 100 une fonction d'arrêt en outre de celle de régulation/réglage.

Par ailleurs, comme illustré sur les figures 1 et 2A à 2H, l'ouverture 125 ménagée sur la paroi 124 de l'élément de laminage 120 s'arrête avant le bord inférieur de l'élément de laminage 120 de manière à laisser subsister un anneau de matière 126 sur toute la périphérie inférieure de l'élément de laminage 120. L'anneau de matière 126 constitue du côté de la cavité interne 123 une zone d'appui permanente pour le joint d'étanchéité 130. La présence de l'anneau de matière 126 permet, par conséquent, au joint d'étanchéité 130 d'avoir toujours au moins deux zones d'appui P_{A}, P_{B} diamétralement opposées sur la paroi de la cavité interne 123 de l'élément de laminage 120, et ce même en position de pleine ouverture comme illustrée sur la figure 1. Cela permet d'éviter l'endommagement du joint d'étanchéité annulaire 130 lors de la rotation de l'élément de laminage car en assurant au moins deux zones d'appui diamétralement opposées sur la paroi de la cavité interne 123 sur toute la course de rotation de l'élément de laminage, ce dernier exerce une force d'appui équilibrée sur le joint qui contribue à le maintenir en place dans le logement du tube porte joint. L'ouverture 125 présente une hauteur maximale inférieure au diamètre du joint d'étanchéité 130.

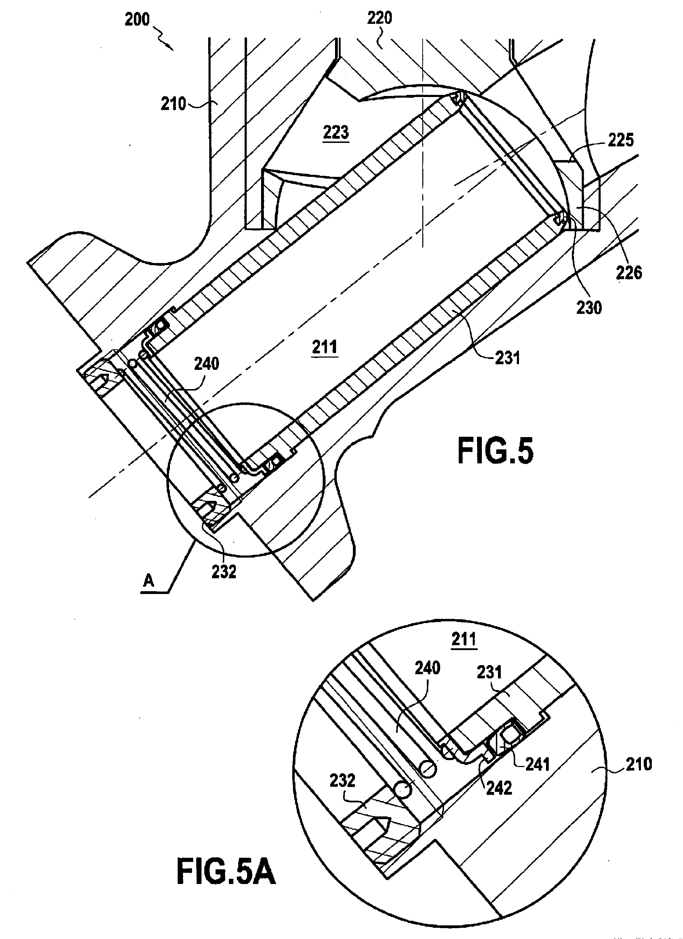

La figure 5 montre une variante de réalisation de dispositif de vanne 200 qui diffère de celui représenté dans la figure 1 en ce que le joint annulaire d'étanchéité est maintenu contre la paroi de la cavité interne de l'élément de laminage par une force de rappel. Plus précisément, comme illustré sur la figure 5, le dispositif de vanne 200 comprend un corps de vanne 210 dans lequel est disposé un élément de laminage 220 similaire à celui déjà décrit précédemment pour le dispositif de vanne 100. De même, le dispositif de vanne 200 comprend un joint annulaire d'étanchéité 230 en contact avec la paroi sphérique de la cavité interne 223 de l'élément de laminage 220. Le joint d'étanchéité 230 est disposé à l'extrémité d'un tube porte joint 231 qui est monté coulissant dans le conduit de circulation de fluide 211. Afin d'appliquer un effort de maintien sur le tube porte joint 231 en direction de la paroi de la cavité interne 223 de l'élément de laminage, un ressort 240 est maintenu en compression entre l'autre extrémité du porte joint 231 et une bague de blocage 232, un joint 241 et une rondelle d'appui 242 assurant l'étanchéité entre le porte joint et la bague (figure 5A). Cette configuration permet d'assurer une force de contact constante du joint sur l'élément de laminage, et ce notamment en cas d'usure du joint. Dans l'exemple présenté ici, l'effort mécanique appliqué sur le porte joint est obtenu avec un ressort à spires. Toutefois, tout autre type d'élément élastique apte à exercer une force de maintien sur le tube en direction de l'élément de laminage peut être utilisé. Cet élément élastique peut en outre être recouvert d'un matériau de protection lorsque la matière de celui-ci est susceptible d'être endommagée par le fluide circulant dans le conduit 211. Selon une variante, l'élément élastique peut être constitué par un soufflet placé entre le porte joint et la bague de blocage, le soufflet assurant ainsi à la fois un effort mécanique de maintien sur le porte joint et l'étanchéité entre ce dernier et la bague de blocage.

## Revendications

1. Dispositif de vanne (100) comprenant un corps de vanne (110) délimitant un conduit de circulation de fluide (111) dans lequel est disposé un élément de laminage (120) entraîné en rotation autour de son axe par un moyen actionneur via un arbre d'entraînement (118), l'élément de laminage (120) comportant une cavité interne (123) délimitée par une paroi circulaire (124) ouverte dans sa partie inférieure, la paroi circulaire (124) présentant en outre sur une partie de son pourtour une ouverture (125) de forme évolutive de manière à définir un passage de fluide variable dans le conduit (111) entre une position de pleine ouverture dans laquelle l'ouverture (125) coopère totalement avec le conduit (111) et une position de pleine fermeture dans laquelle ladite paroi circulaire (124) ferme le conduit (111),
**caractérisé en ce qu'**il comprend en outre un joint annulaire d'étanchéité (130) disposé dans le conduit de circulation (111), ledit joint étant en contact avec la paroi de la cavité interne (123) de l'élément de laminage (120) et **en ce que** la cavité interne (123) de l'élément de laminage est de forme sphérique de manière à ce qu'en position de pleine fermeture de la vanne toute la circonférence du joint d'étanchéité (130) est en contact avec la paroi de la cavité interne (123) de l'élément de laminage (120).

2. Dispositif de vanne selon la revendication 1, **caractérisé en ce que** l'élément de laminage (120) comporte un anneau de matière (126) en dessous de l'ouverture (125), le joint annulaire d'étanchéité (130) étant en appui sur ledit anneau.

3. Dispositif de vanne selon la revendication 1 ou 2, **caractérisé en ce que** le l'ouverture (125) présente une hauteur maximale inférieure au diamètre du joint annulaire d'étanchéité (130).

4. Dispositif de vanne selon l'une quelconque des revendications 1 à 3, **caractérisé en ce qu'**il comprend en outre un tube porte joint (131) disposé dans le conduit de circulation de fluide (111), le joint (130) étant maintenu entre l'extrémité du tube porte joint et la paroi de la cavité interne (123) de l'élément de laminage (120).

5. Dispositif de vanne selon la revendication 4, **caractérisé en ce qu'**il comprend en outre des moyens pour maintenir le tube porte joint (131) dans une position fixe à l'intérieur de conduit de circulation de fluide (111).

6. Dispositif de vanne selon la revendication 4, **caractérisé en ce que** le tube porte joint (231) est monté coulissant dans le conduit de circulation de fluide (211) et **en ce que** le dispositif comprend en outre des moyens (240) pour appliquer un effort de maintien sur le tube porte joint (231) en direction de la paroi de la cavité interne (223) de l'élément de laminage (220).

7. Dispositif de vanne selon l'une quelconque des revendication 1 à 6, **caractérisé en ce que** l'ouverture (125) présente un profil qui s'agrandit progressivement autour de l'élément de laminage.

8. Dispositif de vanne selon l'une quelconque des revendications 1 à 6, **caractérisé en ce que** l'ouverture présente un profil qui est fonction de la loi de perte de charge désirée.

9. Dispositif de vanne selon l'une quelconque des revendications 1 à 8, **caractérisé en ce que** l'ouverture (125) s'étend autour de la paroi circulaire (126) de l'élément de laminage (120) sur un angle allant jusqu'à 250°.

## Claims

1. A valve device (100) comprising a valve body (110) defining a fluid flow duct (111) having a throttle element (120) disposed therein and turned about its axis by actuator means via a drive shaft (118), the throttle element (120) having an internal cavity (123) defined by a circular wall (124) that is open in its bottom portion, the circular wall (124) also presenting, over a portion of its periphery, an opening (125) of varying shape so as to define a fluid flow passage in the duct (111) that is variable between a fully-open position in which the opening (125) co-operates in full with the duct (111), and a fully-closed position in which said circular wall (124) closes the duct (111),
the valve device being **characterized in that** it further comprises an annular sealing gasket (130) disposed in the flow duct (111), said gasket being in contact with the wall of the internal cavity (123) in the throttle element (120), and **in that** the internal cavity (123) of the throttle element is spherical in shape so that in the fully-closed position of the valve, the entire circumference of the sealing gasket (130) is in contact with the wall of the internal cavity (123) of the throttle element (120).

2. A valve device according to claim 1, **characterized in that** the throttle element (120) includes a ring (126) of material below the opening (125), the annular sealing gasket (130) bearing against said ring.

3. A valve device according to claim 1 or claim 2, **characterized in that** the opening (125) presents a maximum height that is less than the diameter of the annular sealing gasket (130).

4. A valve device according to claim 1, **characterized in that** it further includes a gasket-carrier tube (131) disposed in the fluid flow duct (111), the gasket (130) being held between the end of the gasket-carrier tube and the wall of the internal cavity (123) of the throttle element (120).

5. A valve device according to claim 4, **characterized in that** it further comprises means for holding the gasket-carrier tube (131) in a stationary position inside the fluid flow duct (111).

6. A valve device according to claim 4, **characterized in that** the gasket-carrier tube (231) is mounted to slide in the fluid flow duct (211), and **in that** the device further includes means (240) for applying a force on the gasket-carrier tube (231), urging it towards the wall of the internal cavity (223) of the throttle element (220).

7. A valve device according to claim 1, **characterized in that** the opening (125) presents a profile that enlarges progressively along the throttle element.

8. A valve device according to claim 1, **characterized in that** the opening presents a profile that is a function of a desired head loss relationship.

9. A valve device according to claim 1, **characterized in that** the opening (125) extends around the circular wall (126) of the throttle element (120) over an angle of up to 250°.

## Patentansprüche

1. Ventilvorrichtung (100) umfassend:
einen Ventilkörper (110), welcher eine Flüssigkeitsleitung (111) eingrenzt, in welcher ein Drosselelement (120) angeordnet ist, welches in einer Drehbewegung um seine Achse mittels einer Antriebswelle (118) angetrieben wird, wobei das Drosselelement (120) einen inneren Hohlraum (123) aufweist, der durch eine in ihrem unteren Teil offene kreisförmige Wand (124) begrenzt wird, wobei die kreisförmige Wand (124) unter anderem auf einem Abschnitt ihres Umfanges eine progressiv geformte Öffnung (125) derart aufweist, daß ein Flüssigkeitsdurchgang in der Leitung (111) definiert wird, der zwischen einer ganz offenen Stellung, in welcher die Öffnung (125) mit der Leitung (111) völlig übereinstimmt, und einer ganz geschlossenen Stellung, in welcher die kreisförmige Wand (124) die Leitung (111) schließt, einstellbar ist,
**dadurch gekennzeichnet, daß**
sie ferner einen Dichtungsring (130) umfaßt, der in der Leitung (111) angeordnet ist, wobei der Dichtungsring mit der Wand des inneren Hohlraumes (123) des Drosselelements (120) in Kontakt steht, und daß der innere Hohlraum (123) des Drosselelements derart kugelförmig ist, daß in der voll geschlossenen Stellung des Ventils der ganze Umfang des Dichtungsringes (130) mit der Wand des inneren Hohlraumes (123) des Drosselelements (120) in Kontakt steht.

2. Ventilvorrichtung nach Anspruch 1,
**dadurch gekennzeichnet, daß**
das Drosselelement (120) einen Materialring (126) unter der Öffnung (125) aufweist, wobei der Dichtungsring (130) auf dem Materialring aufliegt.

3. Ventilvorrichtung nach Anspruch 1 oder 2,
**dadurch gekennzeichnet, daß**
die Öffnung (125) eine maximale Höhe besitzt, die kleiner ist als der Durchmesser des Dichtungsrings (130).

4. Ventilvorrichtung nach einem der Ansprüche 1 bis 3,
**dadurch gekennzeichnet, daß**
sie ferner ein Dichtungstragrohr (131) umfaßt, das in der Flüssigkeitsleitung (111) angeordnet ist, wobei die Dichtung (130) zwischen dem Endteil des Dichtungstragrohres und der Wand des inneren Hohlraumes (123) des Drosselelements (120) gehalten wird.

5. Ventilvorrichtung nach Anspruch 4,
**dadurch gekennzeichnet, daß**
sie ferner Mittel zum Halten des Dichtungstragrohres (131) in einer festen Position innerhalb der Flüssigkeitsleitung (111) umfaßt.

6. Ventilvorrichtung nach Anspruch 4,
**dadurch gekennzeichnet, daß**
das Dichtungstragrohr (231) verschieblich innerhalb der Flüssigkeitsleitung (211) eingebaut ist und daß die Vorrichtung ferner Mittel (240) umfaßt, um eine Haltekraft auf das Dichtungsrohr (231) in Richtung der Wand des inneren Hohlraumes (223) des Drosselelements (220) zu übertragen.

7. Ventilvorrichtung nach einem der Ansprüche 1 bis 6,
**dadurch gekennzeichnet, daß**
die Öffnung (125) einen Querschnitt aufweist, der sich um das Drosselelement schrittweise vergrößert.

8. Ventilvorrichtung nach einem der Ansprüche 1 bis 6,
**dadurch gekennzeichnet, daß**
die Öffnung einen Querschnitt aufweist, der eine gesetzmäßige Funktion des gewünschten Druckverlustes ist.

9. Ventilvorrichtung nach einem der Ansprüche 1 bis 8,
**dadurch gekennzeichnet, daß**
die Öffnung (125) sich entlang der kreisförmigen Wand (126) des Drosselelements (120) über einen Winkel bis zu 250° erstreckt.
